# EUROPÄISCHE PATENTANMELDUNG

(11) **EP 4 056 880 A1**
(43) Veröffentlichungstag der Anmeldung: **14.09.2022**
(21) Anmeldenummer: 22161397.9
(22) Anmeldetag: 10.03.2022
(51) Int. Cl.: F16K 25/00, F16J 15/34, F16J 15/38, F16K 5/06, F16K 5/20, F01P 7/14

(54) **DREHKOLBENABDICHTUNG**

(30) Priorität: 12.03.2021 DE 102021106134
(71) Anmelder: WOCO Industrietechnik GmbH, 63628 Bad Soden-Salmünster (DE)
(72) Erfinder: Heldmann, Martin, 36381 Schlüchtern (DE); Seitz, Christian, 63607 Wächtersbach (DE)
(74) Vertreter: Schmid, Nils T.F.

(57) **Zusammenfassung**

Die vorliegende Erfindung betrifft eine Dichtung (1) zum Abdichten eines in einem fluidführenden Gehäuse drehbar gelagerten Drehkolben-Stellglieds (5) eines Fluidstellventils beispielsweise zum Thermomanagement in einem Kraftfahrzeug, umfassend: eine fluidströmungsaufwärts des Drehkolbens (5) anzuordnende und dem einströmenden Fluidströmungsdruck auszusetzende, dem Drehkolben (5) zuzuwendende Druckauflagefläche (37), über die die Dichtung (1) mittels des Fluidströmungsdrucks von dem Drehkolben (5) weg drängbar ist; und eine fluidströmungsaufwärts des Drehkolbens (5) anzuordnende und dem einströmenden Fluidströmungsdruck auszusetzende, dem Gehäuse zuzuwendende Druckauflagefläche (35), über die die Dichtung (1) mittels des Fluidströmungsdrucks zu dem Drehkolben (5) hin drängbar ist; wobei die drehkolbenseitige Druckauflagefläche (37) und die gehäuseseitige Druckauflagefläche (35) derart aufeinander abgestimmt sind, dass die Dichtung (1) in Richtung des Drehkolbens (5) gedrängt wird.

## Beschreibung

Die vorliegende Erfindung betrifft eine Dichtung zum Abdichten eines in einem fluidführenden Gehäuse drehbar gelagerten Drehkolben-Stellglieds eines Fluidstellventils beispielsweise zum Thermomanagement in einem Kraftfahrzeug. Ferner stellt die vorliegende Erfindung eine Dichtungsbaugruppe zum insbesondere lösbaren Montieren an ein Fluidstellventil beispielsweise zum Thermomanagement in einem Kraftfahrzeug sowie ein Fluidstellventil beispielsweise zum Thermomanagement in einem Kraftfahrzeug bereit.

Aus der Veröffentlichungsschrift DE 20 2015 100 400 U1 der Anmelderin ist eine gattungsgemäße Dichtungsanordnung bekannt, die aus einem Hauptdichtkörper, einem Gleitkörper und einem Versteifungskörper besteht und im 3-Komponenten-Spritzgussverfahren hergestellt ist. Die dynamische Abdichtung am Drehkolben wird über eine Oberflächenstrukturierung in Form von Dichtlippen auf der Vorderseite der Dichtung realisiert. Die statische Abdichtung am Gehäuse erfolgt über ein V-förmiges Vorspannelement, das bei der Montage am Gehäuse elastisch deformiert wird, sodass eine Anpresskraft in Richtung des Drehkolbens erzeugt wird. Die Dichtungsanordnung hat sich grundsätzlich bewährt. Es hat sich allerdings herausgestellt, dass das Vorspannelement zum einen verschleißanfällig ist und zum anderen die Anpresskraft des Vorspannelements nicht ausreichend ist, um in sämtlichen Betriebszuständen des Ventils eine zuverlässige Abdichtung zu ermöglichen.

Ferner ist aus EP 3 217 050 B1 eine weitere gattungsgemäße Dichtungsanordnung für ein Drehschieberventil eines Kraftfahrzeug-Kühlkreislaufs bekannt, die mit einer hydraulischen Unterstützung für die dynamische Abdichtung gegen den Drehkolben versehen ist. Eine Bypassströmung des in das Ventil eintretenden Prozessfluids wird stromaufwärts des Drehkolbens so umgeleitet, dass die Bypassströmung eine dem Drehkolben abgewandte Rückseite der Dichtung druckbeaufschlagen kann, um eine Unterstützungskraft in Richtung des Drehkolbens zu bewirken.

Ein Nachteil von EP 3 217 050 B1 besteht darin, dass die Höhe der Druckunterstützung fest vorgegeben und nicht veränderbar ist. Die Dichtung gemäß EP 3 217 050 B1 muss immer mit der äußeren Kante am Drehkolben aufliegen. Des Weiteren ist es mit der Dichtung nicht möglich, eine Druckunterstützung auch dann sicherzustellen, wenn der Innendruck (stromabwärts des Drehkolbens) größer als der Außendruck (stromaufwärts des Drehkolbens) ist. Der Anwendungsbereich der Dichtung von EP 3 217 050 B1 ist damit stark beschränkt.

Es ist Aufgabe der vorliegenden Erfindung, die Nachteile aus dem bekannten Stand der Technik zu verbessern, insbesondere eine Drehkolbendichtung dahingehend weiterzuentwickeln, dass die Abdichtwirkung insbesondere für alle Betriebszustände verbessert ist und/oder die Höhe der Druckunterstützung einstellbar ist.

Diese Aufgabe wird durch die Merkmale der unabhängigen Ansprüche gelöst.

Danach ist eine Dichtung zum Abdichten eines in einem fluidführenden Gehäuse drehbar gelagerten Drehkloben-Stellglieds eines Fluidstellventils beispielweise zum Thermomanagement in einem Kraftfahrzeug bereitgestellt. Das Drehkolben-Stellglied kann beispielsweise auch als Drehschieber bezeichnet werden und dient zur insbesondere stufenlosen Regelung einer Fluidströmung, die beispielsweise ein Kühlmittelstrom oder dergleichen in einem Kraftfahrzeug, beispielsweise zu dessen Klimatisierung im Fahrzeuginnenraum, zur Kühlung von Motorkomponenten oder Batterien oder anderen Aggregaten im Motorraum, sein kann. Das Stellglied ist in der Regel so in dem Fluidstellventilgehäuse angeordnet, dass die mit einem gewissen Fluiddruck einströmende beziehungsweise ankommende Fluidströmung entweder abgesperrt werden kann, sodass ein Durchfluss der Fluidströmung an dem Stellglied vorbei und durch das Fluidstellventil hindurch verhindert ist, und wenigstens teilweise einen Durchfluss der Fluidströmung an dem Stellglied vorbei und durch das Fluidstellventil hindurch ermöglichen kann. Mit anderen Worten kann das Stellglied einen Innenraum des Fluidstellventils, der auch als Ventilraum bezeichnet werden kann, von der Umgebung fluidisch trennen, aus der die Fluidströmung in das Fluidstellventil gerichtet ist. Das Stellglied ist in dem fluidführenden Gehäuse des Fluidstellventils drehbar gelagert und mittels der erfindungsgemäßen Dichtung gegenüber dem Gehäuse abgedichtet, um Leckageströme an dem Stellglied vorbei zu unterbinden. Die Dichtung bildet demnach sowohl einen Dichtkontakt mit dem Gehäuse als auch mit dem Stellglied aus. Die dem Gehäuse zugewandte Seite beziehungsweise Dichtkontaktfläche der Dichtung kann beispielsweise als Innenseite und die dem Drehkolben zugewandte Seite beziehungsweise Dichtkontaktfläche kann beispielsweise als Außenseite bezeichnet werden.

Die erfindungsgemäße Dichtung umfasst eine fluidströmungsaufwärts des Drehkolbens anzuordnende und dem einströmenden Fluidströmungsdruck auszusetzende, dem Drehkolben zuzuwendende Druckauflagefläche. Über die drehkolbenseitige Druckauflagefläche ist die Dichtung mittels des einströmenden Fluidströmungsdrucks von dem Drehkolben weg drängbar. Mit anderen Worten resultiert aus dem einströmenden Fluidströmungsdruck, der auf die drehkolbenseitige Druckauflagefläche wirkt, eine in Richtung weg von dem Drehkolben orientierte Kraft.

Des Weiteren umfasst die Dichtung eine fluidströmungsaufwärts des Drehkolbens anzuordnende und dem einströmenden Fluidströmungsdruck auszusetzende, dem Gehäuse zuzuwendende Druckauflagefläche, über die die Dichtung mittels des Fluidströmungsdrucks der einströmenden Fluidströmung zu dem Drehkolben hindrängbar ist. Anders ausgedrückt bewirkt die auf die gehäuseseitige Druckauflagefläche wirkende einströmende Fluidströmung eine in Richtung des Stellglieds orientierte Kraft auf die Dichtung. Beispielsweise können die beiden resultierenden Kräfte, die auf die drehkolbenseitige Druckauflagefläche und die gehäuseseitige Druckauflagefläche wirken im Wesentlichen entgegengesetzt zueinander orientiert sein.

Gemäß einem Aspekt der vorliegenden Erfindung sind die drehkolbenseitige Druckauflagefläche und die gehäuseseitige Druckauflagefläche derart aufeinander abgestimmt, dass die Dichtung in Richtung des Drehkolbens gedrängt wird. Durch die erfindungsgemäße Aufeinanderabstimmung von drehkolbenseitiger Druckauflagefläche und gehäuseseitiger Druckauflagefläche derart, dass die Dichtung in eine vorbestimmte, gewünschte Richtung zu dem Drehkolben hin gedrängt wird, ist die Abdichtleistung der erfindungsgemäßen Dichtung im Vergleich zum Stand der Technik deutlich verbessert. Es kann auf zusätzliche Vorspann- und/oder Presskomponenten, die die Dichtung an den Drehkolben andrücken sollen, verzichtet werden beziehungsweise diese können mit deutlich weniger Kraftbedarf ausgelegt werden. Als Folge entsteht ein geringeres Drehmoment bei niedrigeren Drücken und damit ein geringerer Verschleiß der Dichtung. Ein weiterer Vorteil ist, dass somit auf kostengünstigere und leistungsärmere Stellantriebe beziehungsweise Aktuatoren für den Drehkolben zurückgegriffen werden kann. Ein zusätzlicher Vorteil macht sich bei der Montage der erfindungsgemäßen Dichtung in einem Fluidstellventil bemerkbar. Aufgrund der nicht mehr notwendigen oder zumindest geringer ausgelegten Vorspannkomponenten kann die Montage der Dichtung deutlich einfacher und mit weniger Kraftaufwand erfolgen. Die Erfinder der vorliegenden Erfindung haben erkannt, dass durch die aufeinander Abstimmung der dem einströmenden Fluidströmungsdruck ausgesetzten Flächen der Dichtung der ohnehin vorhandene Fluidströmungsdruck ausgenutzt werden kann, um eine Vorspannung der Dichtung in Richtung des Drehkolbens zur Erhöhung der Abdichtwirkung aufzubauen beziehungsweise zu unterstützen.

Wenn in der vorliegenden Anmeldung von fluidströmungsaufwärts beziehungsweise fluidströmungsabwärts gesprochen wird, ist dies im Hinblick auf die Strömungsrichtung der einströmenden und einzustellenden Fluidströmung zu verstehen. Beispielweise ist der Ausdruck fluidströmungsaufwärts des Stellglieds so zu verstehen, dass die Fluidströmung das Stellglied noch nicht passiert hat, während fluidströmungsabwärts des Stellglieds dahingehend zu verstehen ist, dass die Fluidströmung bereits das Stellglied passiert hat.

Ferner herrscht in der Regel innerhalb des Fluidstellventils, insbesondere in dessen Ventilraum, insbesondere fluidströmungsabwärts des Stellglieds, ebenfalls ein Fluiddruck, ein sogenannter Innendruck. In der Regel ist der Fluiddruck der einströmenden Fluidströmung, auch als Außendruck bezeichnet, größer als der Innendruck innerhalb des Fluidstellventils.

In einer beispielhaften Ausführung der vorliegenden Erfindung ist die drehkolbenseitige Druckauflagefläche durch eine dynamische Dichtlippe von einer fluidströmungsabwärts des Drehkolbens anzuordnenden und dem Fluidströmungsdruck fluidströmungsabwärts des Drehkolbens, also dem Innendruck, auszusetzenden, dem Drehkolben zuzuwendenden Innendruckauflagefläche getrennt. Beispielsweise steht die dynamische Dichtlippe von der Druckauflagefläche vor, insbesondere im Wesentlichen in Axialrichtung der Dichtung. Mit anderen Worten kann die Dichtung eine dem Drehkolben zuzuwendende Fläche, insbesondere Außenfläche, aufweisen, welche in zwei Abschnitte unterteilt ist, nämlich über die dynamische Dichtlippe, welche einen dynamischen Dichtkontakt mit dem Drehkolben ausbildet, sodass eine dem einströmenden Fluidströmungsdruck ausgesetzte Druckauflagefläche und eine dem Innendruck ausgesetzte Innendruckauflagefläche resultiert. An beiden Flächen wirkt somit ein Fluidströmungsdruck an, welcher die Dichtung weg von dem Drehkolben drängt. Der Dichtkontakt der Dichtung mit dem Stellglied wird insbesondere ausschließlich über die Dichtlippe realisiert, die verhindert, dass die einströmende Fluidströmung an der Dichtung und dem Stellglied vorbeigelangt und eine Vermischung zwischen Innenfluiddruck und Außenfluiddruck erfolgt.

Gemäß einer beispielhaften Weiterbildung bestimmt die Position der dynamischen Dichtlippe an der Dichtung das Flächenverhältnis aus drehkolbenseitiger Druckauflagefläche und gehäuseseitiger Druckauflagefläche. Die Erfinder der vorliegenden Erfindung haben erkannt, dass auf konstruktiv einfache Art und Weise über die Positionierung der Dichtlippe an der dem Drehkolben zugewandten Seite, insbesondere Außenseite, die resultierende Kraftrichtung der einströmenden Fluidströmung auf die Dichtung eingestellt werden kann, insbesondere um eine fluiddruckabhängige Anpresskraft der Dichtung auf den Drehkolben einzustellen. In einer weiteren beispielhaften Weiterbildung ist die drehkolbenseitige Druckauflagefläche kleiner als die gehäuseseitige Druckauflagefläche. Beispielsweise können für die Betrachtung des Flächenverhältnisses beziehungsweise für die Betrachtung der aufeinander Abstimmung der Druckauflageflächen die jeweils auf eine Ebene projizierten Flächen betrachtet werden. In einer weiteren beispielhaften Ausführung wird bei einem Fluidstellventil, das einen sehr großen Druckbereich insbesondere von 0 bar bis 5 bar Überdruck zur Umgebung abdecken muss, ein geringes Flächenverhältnis aus drehkolbenseitiger Druckauflagefläche zu gehäuseseitiger Druckauflagefläche im Bereich von 1:1 bis 1:2 wählen, da bei niedrigen Drücken sonst die Druckunterstützung gering wäre, was die Gefahr einer Leckage erhöhen würde. Andererseits würde bei großen Drücken eine Gefahr bestehen, dass eine zu große Druckunterstützung erfolgt, was wiederum ein hohes Drehmoment und einen hohen Verschleiß der Komponenten, insbesondere der Dichtung, zur Folge hätte.

Gemäß einer beispielhaften Ausführung liegt das Flächenverhältnis aus gehäuseseitiger Druckauflagefläche zu drehkolbenseitiger Druckauflagefläche bei geringen Drücken von bis zu 2,5 bar Überdruck gegenüber der Umgebung im Bereich von 1,5 und 2,0. Ferner kann das Flächenverhältnis aus gehäuseseitiger Druckauflagefläche zu drehkolbenseitiger Druckauflagefläche bei hohen Drücken von bis zu 5,0 bar Überdruck gegenüber der Umgebung im Bereich von 1,0 und 1,5 liegen.

In einer weiteren beispielhaften Ausführung der erfindungsgemäßen Dichtung sind die Dichtlippe, die Druckauflagefläche und die Innendruckauflagefläche aus einem Stück hergestellt, insbesondere mittels eines Spritzgussverfahrens. Somit lässt sich die erfindungsgemäße Dichtung auf besonders einfache Art und Weise herstellen sowie montieren. Gemäß einer weiteren beispielhaften Ausführung weist die Dichtung eine geschlossene Ringstruktur mit insbesondere rundem Innen- und/oder Außenquerschnitt auf. Des Weiteren ist die dynamische Dichtlippe als Ringvorsprung gebildet. Beispielsweise legt die Ringstruktur der Dichtung eine Axialrichtung fest, die insbesondere eine Mittelachse sein kann, in dessen Richtung die drehkolbenseitige Druckauflagefläche, die gehäuseseitige Druckauflagefläche und insbesondere die drehkolbenseitige Innendruckauflagefläche orientiert sind. Die ringvorsprungartige Dichtlippe, die beispielsweise im Querschnitt abgerundet, insbesondere halbkreisförmig, dreieckförmig gebildet sein kann, steht im Wesentlichen in Axialrichtung orientiert von der Druckauflagefläche und insbesondere der Innendruckauflagefläche vor.

Gemäß einer weiteren beispielhaften Ausführung der Dichtung sind die drehkolbenseitige Druckauflagefläche und die gehäuseseitige Druckauflagefläche in Abhängigkeit einer Druckdifferenz stromauf- und stromabwärts des Drehkolbens aufeinander abgestimmt. Stromaufwärts des Drehkolbens wirkt der Fluiddruck der einströmenden Fluidströmung, also ein Außendruck. Stromabwärts des Drehkolbens wirkt ein als Innendruck bezeichneter Druck im Inneren des Fluidstellventils. Die Dichtung kann dem Innendruck so ausgesetzt sein, dass dieser eine resultierende Kraftkomponente auf die Dichtung ausübt, die bewirken kann, dass die Dichtung in Richtung des Drehkolbens oder weg davon gedrängt wird. Beispielweise drängt der Innendruck die Dichtung weg von dem Drehkolben. Beispielsweise ist das Flächenverhältnis aus drehkolbenseitiger Druckauflagefläche der Dichtung und gehäuseseitiger Druckauflagefläche der Dichtung so bestimmt, dass die Unterstützungskraft in Richtung des Drehkolbens mittels des Fluiddrucks der einströmenden Fluidströmung stromaufwärts des Drehkolbens so gewählt ist, dass sie stets ausreichend ist, um die Dichtung in Richtung des Ventilglieds zu drängen, insbesondere selbst dann, wenn der Innendruck gleich oder größer als der Außendruck sein sollte.

Gemäß einem weiteren Aspekt der vorliegenden Erfindung, der mit den vorhergehenden Aspekten und beispielhaften Ausführungen kombinierbar ist, ist eine Dichtungsbaugruppe zum insbesondere lösbaren Montieren an ein insbesondere erfindungsgemäß ausgebildetes Fluidstellventil, das ein drehbar gelagertes Drehkolben-Stellglied aufweist, beispielsweise zum Thermomanagement in einem Kraftfahrzeug, bereitgestellt. Mittels der Dichtungsbaugruppe kann ein in einem fluidführenden Gehäuse drehbar gelagertes Drehkloben-Stellglied eines Fluidstellventils beispielweise zum Thermomanagement in einem Kraftfahrzeug abgedichtet werden. Das Drehkolben-Stellglied kann beispielsweise auch als Drehschieber bezeichnet werden und dient zur insbesondere stufenlosen Regelung einer Fluidströmung, die beispielsweise ein Kühlmittelstrom oder dergleichen in einem Kraftfahrzeug, beispielsweise zu dessen Klimatisierung im Fahrzeuginnenraum, zur Kühlung von Motorkomponenten oder Batterien oder anderen Aggregaten im Motorraum, sein kann. Das Stellglied ist in der Regel so in dem Fluidstellventilgehäuse angeordnet, dass die mit einem gewissen Fluiddruck einströmende beziehungsweise ankommende Fluidströmung entweder abgesperrt werden kann, sodass ein Durchfluss der Fluidströmung an dem Stellglied vorbei und durch das Fluidstellventil hindurch verhindert ist, und wenigstens teilweise einen Durchfluss der Fluidströmung an dem Stellglied vorbei und durch das Fluidstellventil hindurch ermöglichen kann. Mit anderen Worten kann das Stellglied einen Innenraum des Fluidstellventils, der auch als Ventilraum bezeichnet werden kann, von der Umgebung fluidisch trennen, aus der die Fluidströmung in das Fluidstellventil gerichtet ist. Das Stellglied ist in dem fluidführenden Gehäuse des Fluidstellventils drehbar gelagert und mittels der erfindungsgemäßen Dichtung gegenüber dem Gehäuse abgedichtet, um Leckageströme an dem Stellglied vorbei zu unterbinden. Die Dichtung bildet demnach sowohl einen Dichtkontakt mit dem Gehäuse als auch mit dem Stellglied aus. Die dem Gehäuse zugewandte Seite beziehungsweise Dichtkontaktfläche der Dichtung kann beispielsweise als Innenseite und die dem Drehkolben zugewandte Seite beziehungsweise Dichtkontaktfläche kann beispielsweise als Außenseite bezeichnet werden.

Die Dichtungsbaugruppe umfasst ein fluidführendes Gehäuseteil, wie beispielsweise einen Fluidanschlussstutzen, der beispielsweise einen Fluideingang oder einen Fluidausgang bilden kann. Das Gehäuseteil kann aus einem Stück mit einem fluidführenden Gehäuse des Fluidstellventils, in dem der Drehkolben drehbar gelagert ist oder separat dazu hergestellt sein. Beispielsweise ist das Gehäuseteil lösbar an das fluidführende Gehäuse des Fluidstellventils montierbar. Das fluidführende Gehäuseteil kann beispielsweise einen durch Strömungsquerschnitt für die mittels des Drehkolbens einzustellende Fluidströmung begrenzen.

Des Weiteren umfasst die Dichtungsbaugruppe eine Dichtung zum dynamischen Abdichten des Drehkolben-Stellglieds gegenüber dem Gehäuseteil. Die Dichtung kann beispielsweise gemäß einem der zuvor beschriebenen Aspekte beziehungsweise beispielhaften Ausführungen ausgebildet sein. Die diesbezüglichen Ausführungen sind auf die hier angesprochene Dichtung übertragbar und anwendbar.

Ferner kann die Dichtungsbaugruppe sowohl wenigstens zwei Gehäuseteile als auch wenigstens zwei je einem der Gehäuseteile zugeordnete Dichtungen umfassen.

Die Dichtung umfasst eine Dichtlippe für einen statischen Dichtkontakt mit dem Gehäuseteil. Die Dichtung ist insbesondere quer zur Längsrichtung der Dichtung mit dem Gehäuseteil verpresst. Mittels der Dichtlippe wird sichergestellt, dass stets eine Verpressung zwischen Gehäuseteil und Dichtung besteht, sodass die Dichtung zuverlässig gegenüber dem Gehäuseteil abdichtet.

Gemäß einer beispielhaften Ausführung der Dichtungsbaugruppe umfasst die Dichtungsbaugruppe ferner eine Vorspannkomponente, wie eine Feder, insbesondere eine Druckfeder, die an dem Gehäuseteil derart angeordnet ist, dass sie die Dichtung in Richtung des Drehkolben-Stellglieds drängt. Beispielsweise greift die Vorspannkomponente an derjenigen Fläche der Dichtung an, an der auch die statische Dichtlippe angeordnet ist, und/oder erstreckt sich im Wesentlichen parallel zu dem Gehäuseteil, insbesondere umgibt diesen umlaufend. Gemäß einer beispielhaften Weiterbildung ist die Vorspannkomponente separat zu der Dichtung hergestellt. Durch die Tatsache, dass die Vorspannkomponente separat zu der Dichtung hergestellt ist, ist es möglich, die Funktionen Abdichtung und Verpressung voneinander zu trennen. Während die Dichtungsfunktion von der Dichtung, insbesondere dessen Dichtlippe oder Dichtlippen, übernommen wird, erfolgt die Verpressung über die dazu separate Vorspannkomponente. Ein weiterer Vorteil der Verpressung zwischen Dichtung und Gehäuseteil besteht darin, dass das Gehäuseteil und die Dichtung und gegebenenfalls zusätzlich die Vorspannkomponente zu einer Montageeinheit vormontiert werden können, wodurch die Montage in dem Fluidstellventil deutlich erleichtert ist.

In einer beispielhaften Weiterbildung der Dichtungsbaugruppe weist die Dichtung eine geschlossene Ringstruktur mit insbesondere rundem Innen- und/oder Außenquerschnitt auf und umgibt das Gehäuseteil außenseitig. Beispielsweise kann das Gehäuseteil eine hohlzylindrische Struktur wenigstens abschnittsweise aufweisen und die Ringstruktur der Dichtung kann an einer Außenseite des Gehäuseteils verpresst aufliegen. Beispielsweise ist eine Innenabmessung der statischen Dichtlippe in Bezug auf eine Außenabmessung des Gehäuseteils unterdimensioniert. Mit anderen Worten kann die Dichtlippe Übermaß im Vergleich zu dem Gehäuseteil besitzen. In einer beispielhaften Ausführung liegt eine Presspassung oder eine Übergangspassung vor.

Gemäß einer Weiterbildung der erfindungsgemäßen Dichtungsbaugruppe weist die Dichtung eine Innenumfangsfläche auf, von der die Dichtlippe nach radial innen in Richtung des Gehäuseteils vorsteht. Beispielsweise ist die Dichtlippe in einem Winkel im Bereich von 10° bis 60°, insbesondere im Bereich von 20° bis 50°, insbesondere im Bereich von 25° bis 45°, in Bezug auf die Innenumfangsfläche orientiert. Beispielsweise kann die Innenumfangsfläche im Wesentlichen parallel zur Längs- beziehungsweise Mittelachsrichtung der Dichtung orientiert sein. Ferner kann die Dichtung beispielsweise einen im Wesentlichen ringzylindrischen Grundkörper besitzen und die statische Dichtlippe kann in Axialrichtung betrachtet über dem Grundkörper vorstehen. Durch die Neigung der statischen Dichtlippe in Bezug auf das Gehäuseteil, insbesondere dessen Außenumfangsfläche, ist zum einen eine einfache Montage möglich und zum anderen stellt sich die Verpressung auf herstellungstechnische und montagetechnisch einfache Weise ein. Beim Verpressen der Dichtung mit dem Gehäuseteil wird die statische Dichtlippe nach radial außen elastisch deformiert, sodass sich eine elastische Deformationsrückstellkraft aufbaut, welche letztlich für die Anpresskraft in Richtung des Gehäuseteils verantwortlich ist und die Dichtung in Richtung des Gehäuseteils drängt beziehungsweise drückt.

Gemäß einer weiteren beispielhaften Weiterbildung der Dichtungsbaugruppe weist das Gehäuseteil eine, insbesondere eine umlaufende, außenseitige Dichtungsnut auf, in die die insbesondere umlaufende statische Dichtlippe eingreift. Auf diese Weise lassen sich Fehlmontagen vermeiden. Des Weiteren kann somit sichergestellt werden, dass die Dichtung in Bezug auf das Gehäuseteil in einer vordefinierten, gewünschten Position angeordnet ist. Beispielsweise greift die statische Dichtlippe widerhakenartig in die Dichtungsnut ein, sodass bei einem Ausfall der Vorspannkomponente die Dichtung im Dichtkontakt mit dem Drehkolben verbleibt. Somit können Fehl-Betriebszustände und/oder Leckage zuverlässig vermieden werden.

Gemäß einem weiteren Aspekt der vorliegenden Erfindung, der mit den vorhergehenden Aspekten und beispielhaften Ausführungen kombinierbar ist, ist ein Fluidstellventil beispielsweise zum Thermomanagement in einem Kraftfahrzeug bereitgestellt. Das Fluidstellventil dient beispielsweise zur insbesondere stufenlosen Einstellung einer Fluidströmung, die beispielsweise ein Kühlmittelstrom oder dergleichen in einem Kraftfahrzeug, beispielsweise zu dessen Klimatisierung im Fahrzeuginnenraum, zur Kühlung von Motorkomponenten oder Batterien oder anderen Aggregaten im Motorraum, sein kann. Das Stellglied ist in der Regel so in dem Fluidstellventilgehäuse angeordnet, dass die mit einem gewissen Fluiddruck einströmende beziehungsweise ankommende Fluidströmung entweder abgesperrt werden kann, sodass ein Durchfluss der Fluidströmung an dem Stellglied vorbei und durch das Fluidstellventil hindurch verhindert ist, und wenigstens teilweise einen Durchfluss der Fluidströmung an dem Stellglied vorbei und durch das Fluidstellventil hindurch ermöglichen kann. Mit anderen Worten kann das Stellglied einen Innenraum des Fluidstellventils, der auch als Ventilraum bezeichnet werden kann, von der Umgebung fluidisch trennen, aus der die Fluidströmung in das Fluidstellventil gerichtet ist.

Das Fluidstellventil umfasst ein fluidführendes, insbesondere mehrteiliges, Gehäuse. Beispielsweise kann das Gehäuse wenigstens einen Fluidanschlussstutzen, wie einen Fluideingang und/oder einen Fluidausgang, aufweisen. Das Gehäuse kann beispielsweise im Kunststoff-Spritzgussverfahren hergestellt sein.

Ferner umfasst das Fluidstellventil ein drehbar in dem Gehäuse gelagertes Drehkolben-Stellglied, insbesondere einen Drehschieber. Das Stellglied ist in der Regel so in dem Fluidstellventilgehäuse angeordnet, dass die mit einem gewissen Fluiddruck einströmende beziehungsweise ankommende Fluidströmung entweder abgesperrt werden kann, sodass ein Durchfluss der Fluidströmung an dem Stellglied vorbei und durch das Fluidstellventil hindurch verhindert ist, und wenigstens teilweise einen Durchfluss der Fluidströmung an dem Stellglied vorbei und durch das Fluidstellventil hindurch ermöglichen kann. Mit anderen Worten kann das Stellglied einen Innenraum des Fluidstellventils, der auch als Ventilraum bezeichnet werden kann, von der Umgebung fluidisch trennen, aus der die Fluidströmung in das Fluidstellventil gerichtet ist.

Das erfindungsgemäße Fluidstellventil umfasst ferner eine insbesondere erfindungsgemäße und nach einem der zuvor beschriebenen Aspekte beziehungsweise beispielhaften Ausführungen ausgebildete Dichtung zum Abdichten des Drehkolbens gegenüber dem Gehäuse. Die Dichtung weist eine fluidströmungsaufwärts des Drehkolbens angeordnete und dem einströmenden Fluidströmungsdruck ausgesetzte, dem Drehkolben zugewandte Druckauflagefläche auf, über die die Dichtung mittels des Fluidströmungsdrucks von dem Drehkolben wegdrängbar ist, und eine fluidströmungsaufwärts des Drehkolbens angeordnete und dem einströmenden Fluidströmungsdrucks ausgesetzte, dem Gehäuse zugewandte Druckauflagefläche, über die die Dichtung mittels des Fluidströmungsdrucks zu dem Drehkolben hindrängbar ist. Erfindungsgemäß sind die drehkolbenseitige Druckauflagefläche und die gehäuseseitige Druckauflagefläche derart aufeinander abgestimmt, dass die Dichtung in Richtung des Drehkolbens gedrängt ist. Das Stellglied ist in dem fluidführenden Gehäuse des Fluidstellventils drehbar gelagert und mittels der erfindungsgemäßen Dichtung gegenüber dem Gehäuse abgedichtet, um Leckageströme an dem Stellglied vorbei zu unterbinden. Die Dichtung bildet demnach sowohl einen Dichtkontakt mit dem Gehäuse als auch mit dem Stellglied aus. Die dem Gehäuse zugewandte Seite beziehungsweise Dichtkontaktfläche der Dichtung kann beispielsweise als Innenseite und die dem Drehkolben zugewandte Seite beziehungsweise Dichtkontaktfläche kann beispielsweise als Außenseite bezeichnet werden.

In einer beispielhaften Ausführung des Fluidstellventils ist die Dichtung als Teil einer erfindungsgemäß ausgebildeten Dichtungsbaugruppe in das Fluidstellventil als Montageeinheit montiert. Insofern sind die zuvor beschriebenen Aspekte und Ausführungen sowie die damit einhergehenden Vorteile auf das Fluidstellventil anwendbar. Durch die vormontierte Montageeinheit wird die Montage des Fluidstellventils erheblich erleichtert. Ferner gestaltet sich Wartung und Instandsetzung als deutlich weniger kompliziert. Bei der Montage sind außerdem weniger Kräfte notwendig, um die Komponenten miteinander zu verbinden.

In einer weiteren beispielhaften Ausführung ist die Dichtung in Richtung des Drehkolbens vorgespannt. Die Vorspannung kann beispielsweise mittels einer Vorspannkomponente, wie einer Feder, insbesondere einer Druckfeder, insbesondere einer nach einem der zuvor beschriebenen Aspekte beziehungsweise beispielhaften Ausführungen ausgebildeten Dichtungsbaugruppe erfolgen. Dabei kann vorgesehen sein, dass die Vorspannkomponente separat zu der Dichtung hergestellt ist. Die Vosprannkomponente kann an dem Gehäuseteil derart angeordnet sein, dass sie die Dichtung in Richtung des Drehkolben-Stellglieds drängt. Beispielsweise greift die Vorspannkomponente an derjenigen Fläche der Dichtung an, an der auch die statische Dichtlippe angeordnet ist, und/oder erstreckt sich im Wesentlichen parallel zu dem Gehäuseteil, insbesondere umgibt diesen umlaufend. Gemäß einer beispielhaften Weiterbildung ist die Vorspannkomponente separat zu der Dichtung hergestellt. Durch die Tatsache, dass die Vorspannkomponente separat zu der Dichtung hergestellt ist, ist es möglich, die Funktionen Abdichtung und Verpressung voneinander zu trennen. Während die Dichtungsfunktion von der Dichtung, insbesondere dessen Dichtlippe oder Dichtlippen, übernommen wird, erfolgt die Verpressung über die dazu separate Vorspannkomponente. Ein weiterer Vorteil der Verpressung zwischen Dichtung und Gehäuseteil besteht darin, dass das Gehäuseteil und die Dichtung und gegebenenfalls zusätzlich die Vorspannkomponente zu einer Montageeinheit vormontiert werden können, wodurch die Montage in dem Fluidstellventil deutlich erleichtert ist.

Gemäß einer beispielhaften Weiterbildung des Fluidstellventils ist die drehkolbenseitige Druckauflagefläche durch eine insbesondere von der Druckauflagefläche vorstehende Dichtlippe zum Ausbilden eines dynamischen Dichtkontakts mit dem Drehkolben von einer fluidströmungsabwärts des Drehkolbens angeordneten und dem Fluidströmungsdruck fluidströmungsabwärts des Drehkolbens ausgesetzten drehkolbenseitigen Innendruckauflagefläche getrennt. Beispielsweise steht die dynamische Dichtlippe von der Druckauflagefläche vor, insbesondere im Wesentlichen in Axialrichtung der Dichtung. Mit anderen Worten kann die Dichtung eine dem Drehkolben zuzuwendende Fläche, insbesondere Außenfläche, aufweisen, welche in zwei Abschnitte unterteilt ist, nämlich über die dynamische Dichtlippe, welche einen dynamischen Dichtkontakt mit dem Drehkolben ausbildet, sodass eine dem einströmenden Fluidströmungsdruck ausgesetzte Druckauflagefläche und eine dem Innendruck ausgesetzte Innendruckauflagefläche resultiert. An beiden Flächen wirkt somit ein Fluidströmungsdruck an, welcher die Dichtung weg von dem Drehkolben drängt. Der Dichtkontakt der Dichtung mit dem Stellglied wird insbesondere ausschließlich über die Dichtlippe realisiert, die verhindert, dass die einströmende Fluidströmung an der Dichtung und dem Stellglied vorbeigelangt und eine Vermischung zwischen Innenfluiddruck und Außenfluiddruck erfolgt.

Gemäß einer weiteren beispielhaften Weiterbildung bestimmt die Position der dynamischen Dichtlippe an der Dichtung das Flächenverhältnis aus drehkolbenseitiger Druckauflagefläche und gehäuseseitiger Druckauflagefläche. Beispielsweise ist die dynamische Dichtlippe so positioniert, dass die drehkolbenseitige Druckauflagefläche kleiner als die gehäuseseitige Druckauflagefläche ist. Beispielsweise können für die Betrachtung des Flächenverhältnisses beziehungsweise für die Betrachtung der aufeinander Abstimmung der Druckauflageflächen die jeweils auf eine Ebene projizierten Flächen betrachtet werden. In einer weiteren beispielhaften Ausführung wird bei einem Fluidstellventil, das einen sehr großen Druckbereich insbesondere von 0 bar bis 5 bar Überdruck zur Umgebung abdecken muss, ein geringes Flächenverhältnis wählen aus drehkolbenseitiger Druckauflagefläche zu gehäuseseitiger Druckauflagefläche im Bereich von 1:1 bis 1:2, da bei niedrigen Drücken sonst die Druckunterstützung gering wäre, was die Gefahr einer Leckage erhöhen würde. Andererseits würde bei großen Drücken eine Gefahr bestehen, dass eine zu große Druckunterstützung erfolgt, was wiederum ein hohes Drehmoment und einen hohen Verschleiß der Komponenten, insbesondere der Dichtung, zur Folge hätte.

Gemäß einem weiteren Aspekt der vorliegenden Erfindung, der mit den vorhergehenden Aspekten und beispielhaften Ausführungen kombinierbar ist, ist ein Fluidstellventil beispielsweise zum Thermomanagement in einem Kraftfahrzeug bereitgestellt. Das Fluidstellventil dient beispielsweise zur insbesondere stufenlosen Einstellung einer Fluidströmung, die beispielsweise ein Kühlmittelstrom oder dergleichen in einem Kraftfahrzeug, beispielsweise zu dessen Klimatisierung im Fahrzeuginnenraum, zur Kühlung von Motorkomponenten oder Batterien oder anderen Aggregaten im Motorraum, sein kann. Das Stellglied ist in der Regel so in dem Fluidstellventilgehäuse angeordnet, dass die mit einem gewissen Fluiddruck einströmende beziehungsweise ankommende Fluidströmung entweder abgesperrt werden kann, sodass ein Durchfluss der Fluidströmung an dem Stellglied vorbei und durch das Fluidstellventil hindurch verhindert ist, und wenigstens teilweise einen Durchfluss der Fluidströmung an dem Stellglied vorbei und durch das Fluidstellventil hindurch ermöglichen kann. Mit anderen Worten kann das Stellglied einen Innenraum des Fluidstellventils, der auch als Ventilraum bezeichnet werden kann, von der Umgebung fluidisch trennen, aus der die Fluidströmung in das Fluidstellventil gerichtet ist.

Das Fluidstellventil umfasst ein fluidführendes, insbesondere mehrteiliges, Gehäuse. Beispielsweise kann das Gehäuse wenigstens einen Fluidanschlussstutzen, wie einen Fluideingang und/oder einen Fluidausgang, aufweisen. Das Gehäuse kann beispielsweise im Kunststoff-Spritzgussverfahren hergestellt sein.

Ferner umfasst das Fluidstellventil ein drehbar in dem Gehäuse gelagertes Drehkolben-Stellglied, insbesondere einen Drehschieber. Das Stellglied ist in der Regel so in dem Fluidstellventilgehäuse angeordnet, dass die mit einem gewissen Fluiddruck einströmende beziehungsweise ankommende Fluidströmung entweder abgesperrt werden kann, sodass ein Durchfluss der Fluidströmung an dem Stellglied vorbei und durch das Fluidstellventil hindurch verhindert ist, und wenigstens teilweise einen Durchfluss der Fluidströmung an dem Stellglied vorbei und durch das Fluidstellventil hindurch ermöglichen kann. Mit anderen Worten kann das Stellglied einen Innenraum des Fluidstellventils, der auch als Ventilraum bezeichnet werden kann, von der Umgebung fluidisch trennen, aus der die Fluidströmung in das Fluidstellventil gerichtet ist.

Das erfindungsgemäße Fluidstellventil umfasst ferner eine insbesondere erfindungsgemäße und nach einem der zuvor beschriebenen Aspekte beziehungsweise beispielhaften Ausführungen ausgebildete Dichtung zum Abdichten des Drehkolbens gegenüber dem Gehäuse. Die Dichtung weist eine fluidströmungsaufwärts des Drehkolbens angeordnete und dem einströmenden Fluidströmungsdruck ausgesetzte, dem Drehkolben zugewandte Druckauflagefläche auf, über die die Dichtung mittels des Fluidströmungsdrucks von dem Drehkolben weg drängbar ist, und eine fluidströmungsaufwärts des Drehkolbens angeordnete und dem einströmenden Fluidströmungsdrucks ausgesetzte, dem Gehäuse zugewandte Druckauflagefläche, über die die Dichtung mittels des Fluidströmungsdrucks zu dem Drehkolben hin drängbar ist.

Gemäß dem weiteren erfindungsgemäßen Aspekt liegt ein Flächenverhältnis aus gehäuseseitiger Druckauflagefläche zu drehkolbenseitiger Druckauflagefläche bei einem Fluidströmungsdruck von bis zu 2,5 bar Überdruck gegenüber der Umgebung im Bereich von 1,5 und 2,0 und/oder bei einem Fluidströmungsdruck von bis zu 5,0 bar Überdruck gegenüber der Umgebung im Bereich von 1,0 und 1,5.

Gemäß einem weiteren Aspekt der vorliegenden Erfindung, der mit den vorhergehenden Aspekten und beispielhaften Ausführungen kombinierbar ist, ist ein Verfahren zum Auslegen einer insbesondere erfindungsgemäßen Dichtung oder einer insbesondere erfindungsgemäß ausgebildeten Dichtungsbaugruppe für ein insbesondere erfindungsgemäßes Fluidstellventil, das ein drehbar gelagertes Drehkolben-Stellglied aufweist, beispielsweise zum Thermomanagement in einem Kraftfahrzeug bereitgestellt.

Das Verfahren kann so erfolgen, dass ein Flächenverhältnis aus gehäuseseitiger Druckauflagefläche zu drehkolbenseitiger Druckauflagefläche bei geringen Drücken von bis zu 2,5 bar Überdruck gegenüber der Umgebung im Bereich von 1,5 und 2,0 eingestellt wird und/oder bei hohen Drücken von bis zu 5,0 bar Überdruck gegenüber der Umgebung im Bereich von 1,0 und 1,5.

Gemäß dem Verfahren wird ein Außendruck fluidströmungsaufwärts des Drehkolbens und ein Innendruck fluidströmungsabwärts des Drehkolbens vorgegeben oder erfasst. Dabei betrifft der Außendruck den Fluiddruck des einströmenden beziehungsweise mittels des Drehkolbens zu stellenden Fluidströmung. Der Innendruck ist als derjenige Fluiddruck zu verstehen, der sich im Innenraum, insbesondere Ventilraum, des Fluidstellventils einstellt. Es sei klar, dass die Zustände in Bezug auf einen geschlossenen Ventilzustand verstanden werden können, bei dem der Drehkolben den Ventilinnenraum von der Umgebung abdichtet, insbesondere trennt, sodass keine Vermischung von Fluidströmung stromabwärts und stromaufwärts des Drehkolbens einhergeht.

Erfindungsgemäß wird in Abhängigkeit einer Druckdifferenz von Außen- und Innendruck ein Flächenverhältnis der Dichtung insbesondere im Hinblick auf eine fluidströmungsdruckabhängige Unterstützungskraft, insbesondere Anpresskraft in Richtung des Drehkolbens, bestimmt. Das Flächenverhältnis kann aus einer fluidströmungsaufwärts des Drehkolbens anzuordnenden und dem Außendruck auszusetzenden, dem Drehkolben zuzuwendenden Druckauflagefläche, über die die Dichtung mittels des Fluidströmungsdrucks von dem Drehkolben wegdrängbar ist, und über eine fluidströmungsabwärts des Drehkolbens anzuordnende und dem Außendruck auszusetzende, einem fluidführenden Gehäuse des Fluidstellventils zuzuwendende Druckauflagefläche, über die die Dichtung mittels des Fluidströmungsdrucks zu dem Drehkolben hindrängbar ist, gebildet werden.

Gemäß einer beispielhaften Ausführung des Verfahrens wird ferner ein Flächenverhältnis der drehkolbenseitigen Druckauflagefläche und einer fluidströmungsabwärts des Drehkolbens anzuordnenden und dem Innendruck des Drehkolbens auszusetzenden, drehkolbenseitigen Innendruckauflagefläche bestimmt. Der Innendruck bezeichnet dabei denjenigen Fluiddruck, der fluidströmungsabwärts des Drehkolbens innerhalb des Fluidstellventils vorliegt. Die Innendruckauflagefläche ist in der Regel so angeordnet, dass der auf die Innendruckauflagefläche wirkende Innendruck eine Kraft auf die Dichtung ausübt, die die Dichtung weg von dem Drehkolben drängt. Es wird erfindungsgemäß sichergestellt, dass das Flächenverhältnis dennoch so gewählt ist, dass die Dichtung stets in Richtung des Drehkolbens gedrängt wird.

In einer weiteren beispielhaften Weiterbildung wird das Flächenverhältnis dadurch eingestellt, dass eine Position einer die drehkolbenseitige Druckauflagefläche und die drehkolbenseitige Innendruckauflagefläche voneinander trennenden Dichtlippe zum Ausbilden eines dynamischen Dichtkontakts mit dem Drehkolben variiert wird. Beispielsweise kann die Dichtlippe eine umlaufende, von den Flächen vorstehende Ringstruktur aufweisen. Die Variation ihrer Position kann somit über eine Variation des Durchmessers der ringförmigen Dichtlippe erfolgen. Beispielsweise wird die dem Außendruck ausgesetzte Druckauflagefläche dadurch vergrößert, dass die dynamische Dichtlippe nach radial innen versetzt wird, insbesondere der Durchmesser der dynamischen Dichtlippe verkleinert wird. Die Verkleinerung der dem Außendruck auszusetzenden Druckauflagefläche erfolgt in umgekehrter Weise.

Im Folgenden werden weitere Eigenschaften, Merkmale und Vorteile der Erfindung mittels Beschreibung bevorzugter Ausführungen der Erfindung anhand der beiliegenden beispielhaften Zeichnungen deutlich, in denen zeigen:
- Fig.1: eine schematische Teilansicht eines Fluidstellventils mit einer beispielhaften Ausführung einer erfindungsgemäßen Dichtungsbaugruppe, die eine beispielhafte Ausführung einer erfindungsgemäßen Dichtung aufweist;
- Fig.2: das Fluidstellventil aus Fig. 1 in einem weiteren Betriebszustand;
- Fig.3 - Fig.5: schematische Darstellungen zu beispielhaften Ausführungen erfindungs-gemäßer Dichtungen, in denen die vorder- und rückseitig mit Fluiddruck beaufschlagbaren projizierten Flächen abgebildet sind; und
- Fig.6 - Fig.7: eine schematische Darstellung einer beispielhaften Ausführung einer Dichtung in Vorder- und Rückansicht.

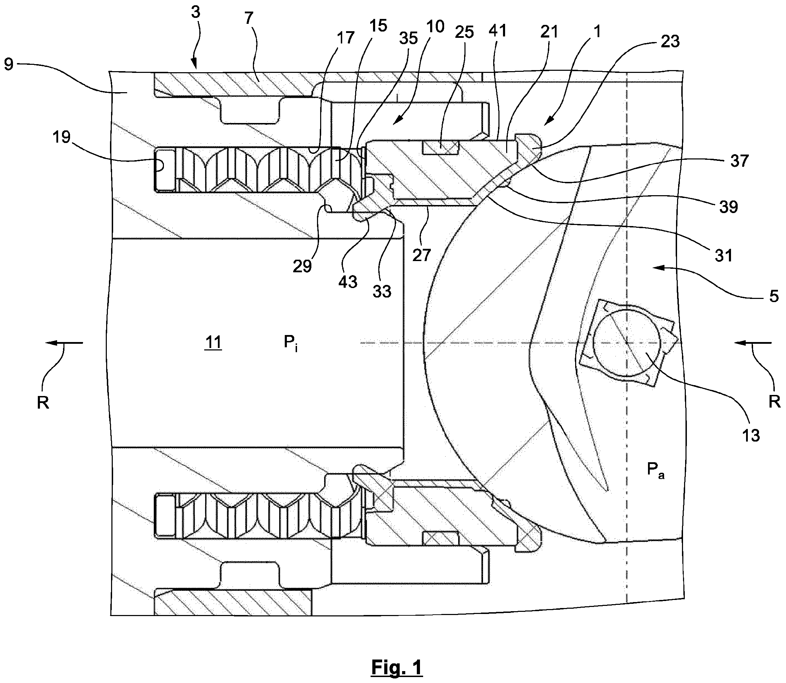

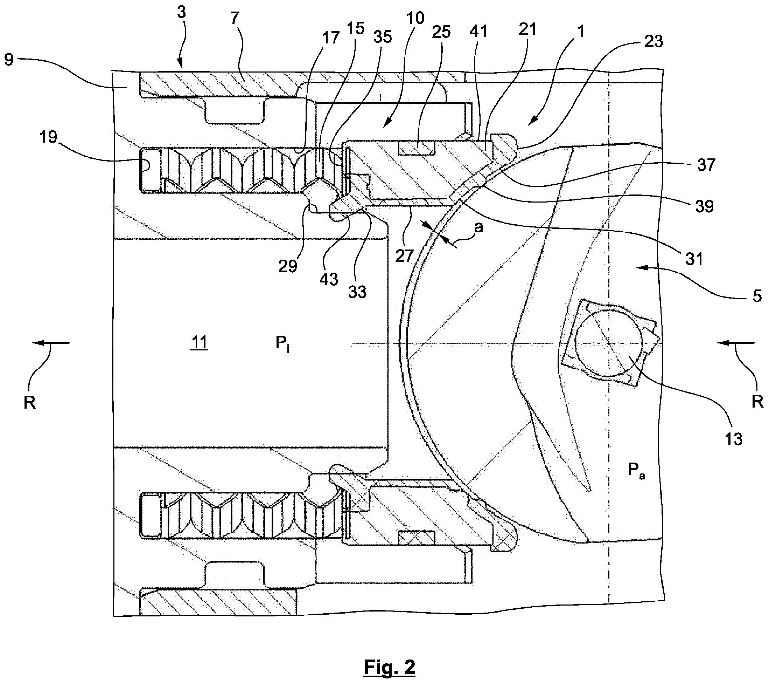

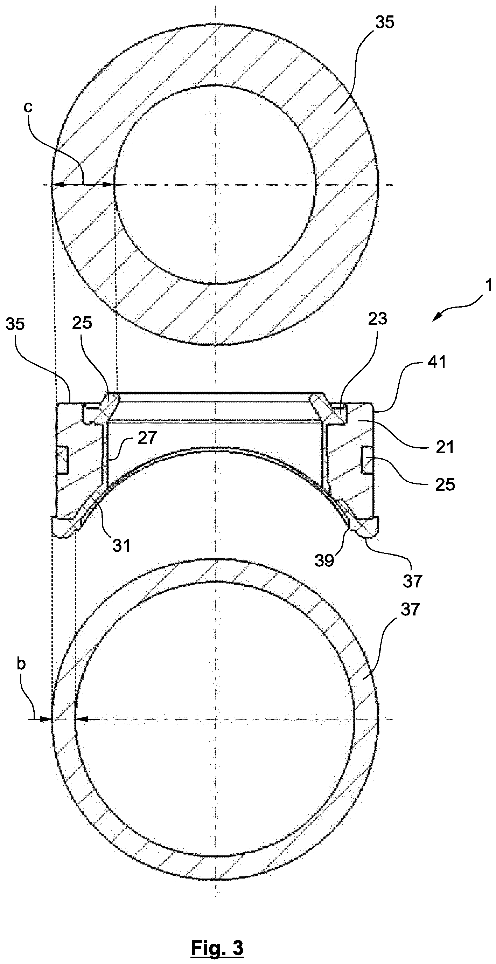

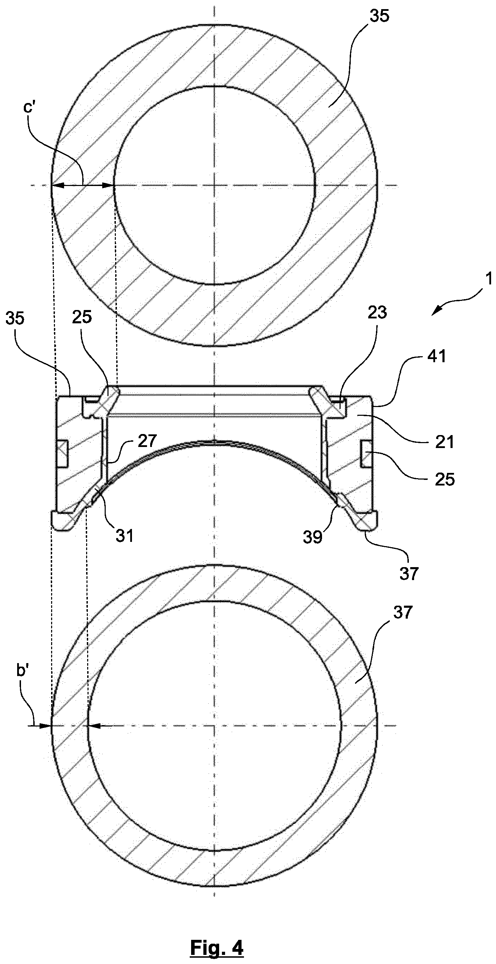

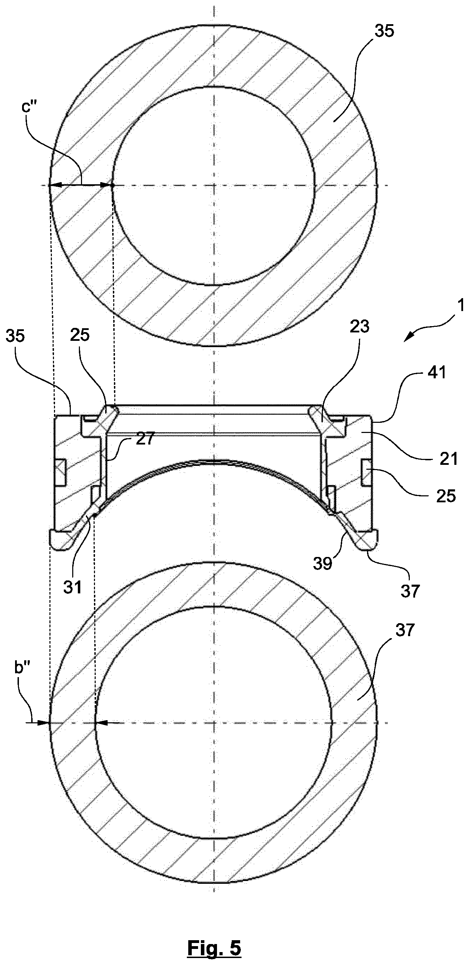

In der folgenden Beschreibung beispielhafter Ausführungen anhand der beiliegenden Figuren ist eine erfindungsgemäße Dichtung zum Abdichten eines in einem fluidführenden Gehäuse drehbar gelagerten Drehkolben-Stellglieds eines Fluidstellventils, das beispielsweise zum Thermomanagement in einem Kraftfahrzeug eingesetzt werden kann, mittels des Bezugszeichen 1 versehen. Eine erfindungsgemäße Dichtungsbaugruppe, die dazu eingerichtet ist, insbesondere lösbar an ein Fluidstellventil montiert zu werden, ist im Allgemeinen mit der Bezugsziffer 10 versehen. In den Figuren 1 und 2 sind beispielhafte Montage-Betriebszustände in Fluidstellventilen der Dichtung 1 beziehungsweise der Dichtungsbaugruppe 10 gezeigt. Anhand der Figuren 3 bis 7 werden beispielhafte Ausführungen der Dichtung 1 veranschaulicht.

Das Fluidstellventil, welches in Figur 1 sowie in Figur 2 nur teilweise abgebildet ist, enthält im Wesentlichen die folgenden Hauptkomponenten: ein fluidführendes Gehäuse 3; ein drehbar in dem Gehäuse 3 gelagertes Drehkolben-Stellglied 5; und eine erfindungsgemäße Dichtung 1 zum Abdichten des Drehkolben-Stellglieds 5, der auch als Drehschieber bezeichnet werden kann gegenüber dem Gehäuse 3.

Das Gehäuse 3 ist mehrteilig ausgebildet und kann ein äußeres Gehäuseteil 7 und ein inneres Gehäuseteil 9 aufweisen, welches beispielweise ein Fluidanschlussstutzen sein kann, der rotationsförmig ausgebildet ist und einen Fluiddurchtrittskanal 11 für eine einzustellende Fluidströmung, dessen Fluidströmungsrichtung durch den Pfeil mit dem Bezugszeichen R angedeutet ist, begrenzt. Bei dem in den Figuren 1 und 2 dargestellten Betriebszustand des Fluidstellventils befindet sich der Drehkolben 5 in einem Schließzustand, sodass die Fluidströmung abgesperrt ist, das heißt eine Fluidströmung an dem Drehkolben 5 vorbei in einen von dem Ventilgehäuse 3 begrenzten Ventilinnenraum, in den der Fluidkanal 11 mündet, ausgeschlossen ist. Der Drehkolben kann beispielweise kraftübertragungsgemäß mit einer Stellstange 13 gekoppelt sein, die wiederum kraftübertragungsgemäß mit einem nicht dargestellten Stellantrieb oder einem Aktuator verbunden ist, mittels dem der Drehkolben 5 stellbar ist, um die Fluidströmung einzustellen. Somit trennt der Drehkolben 5 im Schließzustand den Ventilinnenraum, indem ein Innendruck pᵢ herrscht, von der Umgebung ab, in der der Fluidströmungsausdruck pₐ herrscht. In der Regel ist der Außendruck pₐ größer als der Innendruck pᵢ.

Die Abdichtung des Gehäuses 3 gegenüber dem Drehkolben 5 erfolgt über die Dichtung 1 beziehungsweise die Dichtungsbaugruppe 10, die dichtend an dem Fluidanschlussstutzen-Gehäuseteil 9 montiert ist. Die Dichtungsbaugruppe 10 weist gemäß der Figuren 1 und 2 eine Vorspannkomponente 15, beispielsweise in Form einer Druckfeder, auf, über die die Dichtung 1 in Richtung des Drehkolbens 5 gedrängt beziehungsweise vorgespannt ist. Die Vorspannkomponente 15 ist ringzylindrisch ausgebildet und in einer in dem Gehäuseteil 9 vorgesehenen Vertiefung 17 teilweise untergebracht, sodass sich die Vorspannkomponente 15 an einem Vertiefungsgrund 19 abstützen kann, um eine Kraft in entgegengesetzter Richtung auf die Dichtung 1 auszuüben, damit diese in Richtung des Drehkolbens 5 gedrückt wird.

Die Dichtung ist beispielsweise mehrteilig ausgebildet und kann beispielsweise im Mehrkomponenten-Spritzgussverfahren, insbesondere im Zweikomponenten- oder Dreikomponenten-Spritzgussverfahren, hergestellt werden. Beispielsweise umfasst die Dichtung 1 einen Hauptkörper, beispielsweise aus Gummi und/oder im Spritzgussverfahren hergestellt, bestehend aus einem Dichtungsgleitkörper 23 und einem Grundkörper 25 und gegebenenfalls einen fest mit dem Hauptkörper verbundenen Versteifungskörper 21, beispielsweise in Form eines Kunststoffeinlegeteils. Die Dichtung 1 besitzt im Wesentlichen eine ringzylindrische Form und begrenzt mit ihrer Innenumfangsfläche 27 bei vollständig geöffnetem Drehkolben 5 einen Strömungsdurchtritts bereich.

Die Dichtung 1 ist, wie es in den Figuren 1 und 2 zu sehen ist, sowohl dem Innendruck pᵢ als auch dem Außendruck pₐ ausgesetzt. Die Dichtung 1 weist eine statische Dichtlippe 43, die durch eine umlaufende, nach radial innen sich verjüngende Ringstruktur gebildet ist und mit dem Außenumfang 29 des Gehäuseteils 9 im Dichtkontakt steht, auf. Durch die schematische Darstellung der Dichtung 1 gemäß Figur 1 und 2 ist zu erkennen, dass die Dichtlippe 43 ein Übermaß besitzt in Bezug auf die Außenabmessung der Außenumfangsfläche 29. Mittels der Dichtlippe 43 kann die Dichtung 1 mit dem Gehäuseteil 9 verpresst werden, sodass es beispielsweise möglich ist, die Dichtungsbaugruppe 10 als Montageeinheit auszubilden, um eine einfache Montage in das Fluidstellventil zu ermöglichen. Die Dichtlippe 43 ist in einem Winkel im Bereich von 10° bis 60°, insbesondere im Bereich von 20° bis 50°, insbesondere im Bereich von 25° bis 45°, bezüglich der Axialrichtung bzw. der Innenumfangsfläche 27 der Dichtung 1 orientiert und wird bei der Montage an das Gehäuseteil 9 nach radial außen elastisch deformiert, sodass sich eine elastische Deformationszurückstellkraft aufbaut, die die Verpressung mit dem Gehäuseteil 9 bewirkt. Sowohl die an die Innenumfangsfläche 27 anschließende, unmittelbar dem Drehkolben zugewandte Innendruckauflagefläche 31 als auch die innenseitige, im Bereich des Gehäuses 9 angeordnete Innendruckauflagefläche 33, die an der Dichtlippe 43 angeordnet ist, sind dem Innendruck pᵢ ausgesetzt. Über deren projizierte Flächen wird mittels des Innendrucks pᵢ eine Kraft auf die Dichtung 1 in Richtung weg von dem Drehkolben 5 aufgebaut.

Der Außendruck pₐ der einströmenden und einzustellenden Fluidströmung wirkt zum einen innenseitig an der Dichtung 1, und zwar fluidströmungsaufwärts des Drehkolbens 1, an einer gehäuseseitigen Druckauflagefläche 35, dessen projizierte Fläche im Wesentlichen durch die volle Radialerstreckung der Dichtung 1 bestimmt ist. Über diese projizierte Fläche bringt der Außendruck pₐ einen Anpressdruck auf die Dichtung 1 in Richtung des Drehkolbens 5 auf, die eine zuverlässige dynamische Abdichtung des Drehkolbens 5 gewährleistet. Ferner ist eine drehkolbenseitige Druckauflagefläche 37 dem Außendruck pₐ ausgesetzt, über dessen projizierte Fläche der Außendruck pₐ eine Kraft auf die Dichtung 1 weg von dem Drehkolben 5 ausübt.

Gemäß einem Aspekt der vorliegenden Erfindung sind wenigstens diejenigen Flächen, an denen der Außendruck pₐ anliegt, aufeinander abgestimmt im Hinblick auf eine druckabhängige Unterstützungskraft, die die Abdichtung zwischen Dichtung 1 und Drehkolben 5 unterstützt, nämlich dadurch, dass die Dichtung 1 in Richtung des Drehkolbens 5 gedrängt wird. Mit anderen Worten sind die Flächen so aufeinander abgestimmt, dass eine gesamtresultierende, fluiddruckabhängige Fluiddruckkraft auf die Dichtung 1 wirkt, die in Richtung des Drehkolbens 5 orientiert ist.

Die Einstellung der Unterstützungskraft erfolgt über die Positionierung einer die drehkolbenseitige Druckauflagefläche 37 von der drehkolbenseitigen Innendruckauflagefläche 31 trennende dynamische Dichtlippe 39, die einen dynamischen Dichtkontakt mit dem Drehkolben 5 ausbildet und im Wesentlichen ausschließlich die Abdichtung zwischen Innen- und Außenseite übernimmt. Die dynamische Dichtlippe 39 ist als Ringvorsprung an der dem Drehkolben 5 zugewandten Seite der Dichtung 1 angeordnet und ausgebildet. Über dessen Positionierung an der dem Drehkolben 5 zugewandten Seite kann die dem Außendruck pₐ ausgesetzte wirksame Größe der Druckauflagefläche 37 bestimmt beziehungsweise eingestellt werden, sodass damit indirekt das Flächenverhältnis gegenüber der innenseitigen, gehäuseseitigen Druckauflagefläche 37 bestimmt beziehungsweise eingestellt wird. Mit zunehmendem Durchmesser des Ringvorsprungs 39 nimmt die drehkolbenseitige Druckauflagefläche 37 ab und damit die über den Fluidaußendruck aufbaubare beziehungsweise aufbringbare Unterstützungskraft beziehungsweise Anpresskraft der Dichtung 1 in Richtung des Drehkolbens 5 zu.

Aus einer Zusammenschau von Figur 1 mit Figur 2, die einen Zustand des Fluidstellventils beziehungsweise der Dichtungsbaugruppe 10 und der Dichtung 1 darstellt, bei dem kein Fluiddruck vorliegt oder der Innendruck pᵢ dem Außendruck pₐ entspricht, ist die Dichtung 1 im Vergleich zu Figur 1, bei der der Außendruck pₐ den Innendruck pᵢ übersteigt und somit die Dichtung 1 in Folge der Fluiddruckunterstützung sowie auch in Folge der Vorspannkraft der Vorspannkomponente 15 in einen Anpress-Dichtkontakt mit dem Drehkolben 5 gebracht ist, geht hervor, dass die Dichtung 1 in Figur 2 weniger stark in Richtung des Drehkolbens 5 vorgespannt ist. Es resultiert eine Axialverlagerung der Dichtung 1 weg von dem Drehkolben 5, die einen Axialversatz a zwischen Druckauflagefläche 37 bzw. Innendruckauflagefläche 31 und Drehkolben 5 zur Folge hat. Weiterhin bleibt jedoch ein vollständiger und ausreichender Dichtkontakt zwischen der dynamischen Dichtlippe 39 und dem Drehkolben 5 sowie auch zwischen der statischen Dichtlippe 43 und der Außenumfangsfläche 29 des Gehäuseteils 9 bestehen. Mit anderen Worten ist der Axialversatz a kleiner als die Axialabmessung der Dichtlippe 39. Auch in Bezug auf die dynamische Dichtlippe 39 sei im Hinblick auf Figur 1 angemerkt, dass die Darstellung schematisch zu verstehen ist und die dynamische Dichtlippe 39 beim Anpressen an den Dichtkolben 5 axial komprimiert und zusammenstaucht und in Figur 2 dann in einem weniger deformierten beziehungsweise komprimierten Zustand abgebildet ist.

In einer beispielhaften Ausführung der Dichtung 1 ist an einer Außenseite 41 der Dichtung 1 eine Verdrehsicherung beispielsweise in Form wenigstens einer von der Außenseite 41 nach radial außen vorstehenden Rippe angeordnet. Die Rippe (nicht abgebildet) kann in eine entsprechende Nut im Gehäuse 3 eingreifen um eine Verdrehung und damit eine Positionssicherung zu gewährleisten. Des Weiteren kann über die Rippe-Vertiefung-Struktur eine vordefinierte Montage gewährleistet werden, wobei die Nut als Führungsschiene für die Rippe dient.

Anhand der Figuren 3 bis 5 wird schematisch ein Vorteil der vorliegenden Erfindung im Hinblick auf die einfache und flexible Bestimmbarkeit bzw. Einstellbarkeit der fluiddruckabhängigen Unterstützungskraft beschrieben. In den Figuren 3 bis 5, die jeweils aus drei Ansichten bestehen, wird die Einstellung der Unterstützungskraft über das Flächenverhältnis aus drehkolbenseitiger Druckauflagefläche 37 und gehäuseseitiger Druckauflagefläche 35 erläutert, die jeweils dem Außendruck pₐ ausgesetzt sind. Die Einstellung beziehungsweise aufeinander Abstimmung der Druckauflageflächen 35, 37 zueinander kann beispielsweise derart erfolgen, dass unabhängig vom Innendruck pᵢ stets gewährleistet ist, dass eine Unterstützungskraft über den Fluiddruck auf die Dichtung in Richtung des Drehkolbens 5 aufgebracht wird, wobei diese Aussage im Hinblick auf die bei einem Fluidstellventil auftretenden Druckschwankungen beziehungsweise möglichen Druckverhältnisse beschränkt ist.

In den Figuren 3 bis 5 ist mittig jeweils eine Schnittansicht einer beispielhaften Ausführung einer erfindungsgemäßen Dichtung 1 abgebildet. Oberhalb der Schnittansicht der Dichtung 1 ist die projizierte Fläche der gehäuseseitigen Druckauflagefläche 35 angedeutet und unterhalb der Dichtung 1 die projizierte Fläche der drehkolbenseitigen Druckauflagefläche 37. Aus einer Zusammenschau der Figuren 3 bis 5 mit Blick auf die dynamische Dichtlippe 39 ist ersichtlich, dass über die Position der Dichtlippe 39 die Größe der projizierten Fläche der drehkolbenseitigen Druckauflagefläche 37 und damit das Flächenverhältnis gegenüber der gehäuseseitigen Druckauflagefläche 35 variierbar beziehungsweise einstellbar ist, um somit eine gewünschte Unterstützungskraft einzustellen. Dabei gilt die Regel, dass mit kleiner werdendem Flächenverhältnis aus drehkolbenseitiger Druckauflagefläche 37 und gehäuseseitiger Druckauflagefläche 35 die Unterstützungskraft abnimmt. Mit anderen Worten nimmt die drehkolbenseitige Druckauflagefläche 37 mit zunehmendem Durchmesser der ringvorsprungartigen dynamischen Dichtlippe 39 ab, also wenn die dynamische Dichtlippe 19 nach radial außen wandert. Die Radialabmessungen der entsprechenden projizierten Flächen sind mit Kleinbuchstaben versehen, wobei das Bezugszeichen b, b' beziehungsweise b" die drehkolbenseitige Druckauflagefläche 37 in den verschiedenen Ausführungen kennzeichnet und das Bezugszeichen c, c' beziehungsweise c" die gehäuseseitige Druckauflagefläche 35 in den verschiedenen Ausführungen der Dichtung.

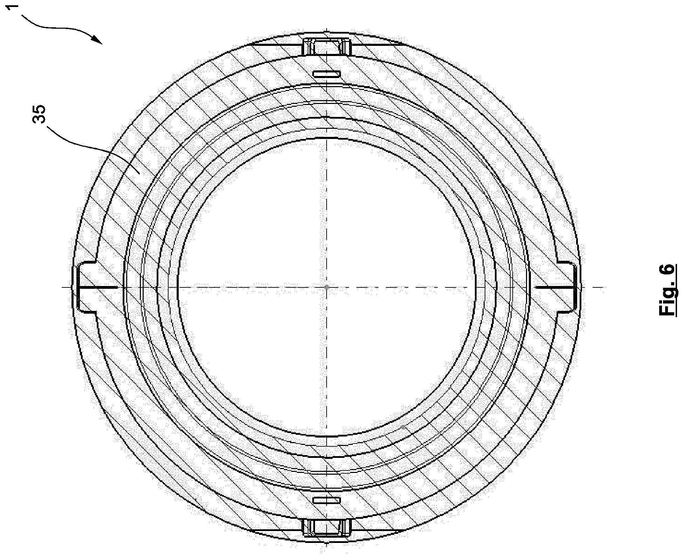

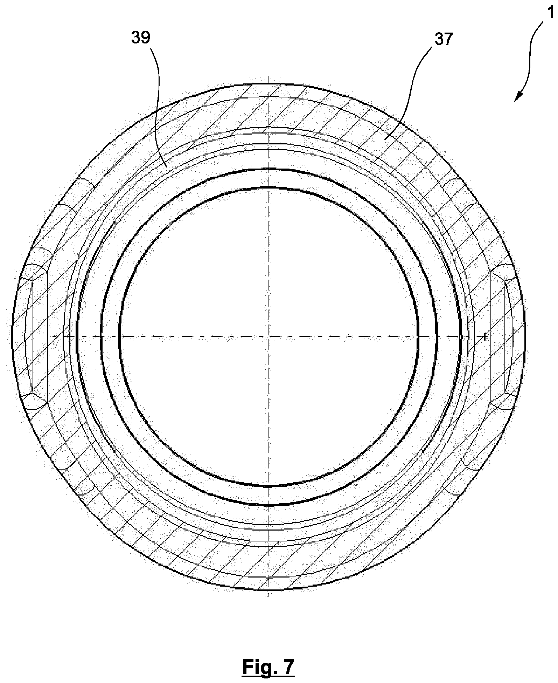

Die Figur 6 zeigt eine dem Gehäuse 9 zuzuwendende beziehungsweise zugewandte Innenseite der Dichtung 1 und die Figur 7 zeigt eine dem Drehkolben 5 zugewandte beziehungsweise zuzuwendende Außenseite, wobei jeweils die dem Außendruck pₐ ausgesetzten Druckauflageflächen 35, 37 schraffiert sind. In Figur 7 ist erneut gut zu erkennen, dass die umlaufende ringvorsprungartige dynamische Dichtlippe 39 die Größe der drehkolbenseitigen Druckauflagefläche 37 bestimmt.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Dichtung
- 3: Gehäuse
- 5: Drehkolben-Stellglied
- 7: äußeres Gehäuseteil
- 9: Fluidanschlussstutzen-Gehäuseteil
- 10: Dichtungsbaugruppe
- 11: Fluiddurchtrittskanal
- 13: Stellstange
- 15: Vorspannkomponente
- 17: Vertiefung
- 19: Vertiefungsgrund
- 21: Versteifungskörper
- 23: Dichtungsgleitkörper
- 25: Grundkörper
- 27: Innenumfangsfläche
- 29: Außenumfangsfläche
- 31: drehkolbenseitige Innendruckauflagefläche
- 33: gehäuseseitige Innendruckauflagefläche
- 35: gehäuseseitige Druckauflagefläche
- 37: drehkolbenseitige Druckauflagefläche
- 39: dynamische Dichtlippe
- 41: Außenseite
- 43: statische Dichtlippe
- Pᵢ: Innendruck
- Pₐ: Außendruck
- R: Fluidströmungsrichtung
- a: radialer Abstand
- b, b', b": Radialabmessung der drehkolbenseitigen Druckauflagefläche
- c, c', c": Radialabmessung der gehäuseseitigen Druckauflagefläche

## Patentansprüche

1. Dichtung (1) zum Abdichten eines in einem fluidführenden Gehäuse drehbar gelagerten Drehkolben-Stellglieds (5) eines Fluidstellventils beispielsweise zum Thermomanagement in einem Kraftfahrzeug, umfassend:
- eine fluidströmungsaufwärts des Drehkolbens (5) anzuordnende und dem einströmenden Fluidströmungsdruck auszusetzende, dem Drehkolben (5) zuzuwendende Druckauflagefläche (37), über die die Dichtung (1) mittels des Fluidströmungsdrucks von dem Drehkolben (5) weg drängbar ist; und
- eine fluidströmungsaufwärts des Drehkolbens (5) anzuordnende und dem einströmenden Fluidströmungsdruck auszusetzende, dem Gehäuse zuzuwendende Druckauflagefläche (35), über die die Dichtung (1) mittels des Fluidströmungsdrucks zu dem Drehkolben (5) hin drängbar ist;
wobei die drehkolbenseitige Druckauflagefläche (37) und die gehäuseseitige Druckauflagefläche (35) derart aufeinander abgestimmt sind, dass die Dichtung (1) in Richtung des Drehkolbens (5) gedrängt wird.

2. Dichtung (1) nach Anspruch 1, wobei die drehkolbenseitige Druckauflagefläche (37) durch eine, insbesondere von der Druckauflagefläche vorstehende, dynamische Dichtlippe (39) zum Ausbilden eines Dichtkontakts mit dem Drehkolben (5) von einer fluidströmungsabwärts des Drehkolbens (5) anzuordnenden und dem Fluidströmungsdruck fluidströmungsabwärts des Drehkolbens (5) auszusetzenden, dem Drehkolben (5) zuzuwendenden Innendruckauflagefläche (31) getrennt ist.

3. Dichtung (1) nach Anspruch 2, wobei die Position der dynamischen Dichtlippe (39) an der Dichtung (1) das Flächenverhältnis aus drehkolbenseitiger Druckauflagefläche (37) und gehäuseseitiger Druckauflagefläche (35) bestimmt, wobei insbesondere die dynamische Dichtlippe (39) so positioniert ist, dass die drehkolbenseitige Druckauflagefläche (37) kleiner als die gehäuseseitige Druckauflagefläche (35) ist.

4. Dichtung (1) nach Anspruch 2 oder 3, wobei die Dichtlippe, die Druckauflagefläche und die Innendruckauflagefläche aus einem Stück hergestellt sind, insbesondere mittels eines Spritzgussverfahrens.

5. Dichtung (1) nach einem der Ansprüche 2 bis 4, wobei die Dichtung (1) eine geschlossene Ringstruktur mit insbesondere rundem Innen- und/oder Außenquerschnitt aufweist und die dynamische Dichtlippe (39) als Ringvorsprung gebildet ist.

6. Dichtung (1) nach einem der vorstehenden Ansprüche, wobei die drehkolbenseitige Druckauflagefläche (37) und die gehäuseseitige Druckauflagefläche (35) in Abhängigkeit einer Druckdifferenz stromauf- und stromabwärts des Drehkolbens (5) aufeinander abgestimmt sind.

7. Dichtungsbaugruppe (10) zum insbesondere lösbaren Montieren an ein insbesondere nach einem der Ansprüche 12 bis 17 ausgebildetes Fluidstellventil, das ein drehbar gelagertes Drehkolben-Stellglied (5) aufweist, beispielsweise zum Thermomanagement in einem Kraftfahrzeug, umfassend:
- ein fluidführendes Gehäuseteil (9), wie einen Fluidanschlussstutzen; und
- eine insbesondere nach einem der vorstehenden Ansprüche ausgebildete Dichtung (1) zum dynamischen Abdichten des Drehkolben-Stellglieds (5) gegenüber dem Gehäuseteil, die eine Dichtlippe (43) für einen statischen Dichtkontakt mit dem Gehäuseteil aufweist, wobei die Dichtlippe (43) mit dem Gehäuseteil insbesondere quer zur Längsrichtung der Dichtung (1) verpresst ist.

8. Dichtungsbaugruppe (10) nach Anspruch 7, ferner umfassend eine Vorspannkomponente (15), wie eine Feder, die an dem Gehäuseteil derart angeordnet ist, dass sie die Dichtung (1) in Richtung des Drehkolben-Stellglieds (5) drängt, wobei insbesondere die Vorspannkomponente (15) separat zu der Dichtung (1) hergestellt ist.

9. Dichtungsbaugruppe (10) nach Anspruch 7 oder 8, wobei die Dichtung (1) eine geschlossene Ringstruktur mit insbesondere rundem Innen- und/oder Außenquerschnitt aufweist und außenseitig das Gehäuseteil (9) umgibt, wobei eine Innenabmessung der statischen Dichtlippe (43) in Bezug auf eine Außenabmessung des Gehäuseteils (9) unterdimensioniert ist, wobei insbesondere eine Presspassung oder eine Übergangspassung vorliegt.

10. Dichtungsbaugruppe (10) nach einem der Ansprüche 7 bis 9, wobei die Dichtung (1) eine Innenumfangsfläche aufweist, von der die Dichtlippe nach radial innen in Richtung des Gehäuseteils vorsteht, wobei insbesondere die Dichtlippe in einem Winkel im Bereich von 10° bis 60°, insbesondere im Bereich von 20° bis 50°, insbesondere im Bereich von 25° bis 45°, in Bezug auf die Innenumfangsfläche orientiert ist.

11. Dichtungsbaugruppe (10) nach einem der Ansprüche 9 bis 10, wobei das Gehäuseteil eine, insbesondere umlaufende, außenseitige Dichtungsnut aufweist, in die die insbesondere umlaufende statische Dichtlippe eingreift, insbesondere widerhakenartig eingreift, sodass bei einem Ausfall der Vorspannkomponente (15) die Dichtung (1) im Dichtkontakt mit dem Drehkolben (5) verbleibt.

12. Fluidstellventil beispielsweise zum Thermomanagement in einem Kraftfahrzeug, umfassend:
- ein fluidführendes Gehäuse (3);
- ein drehbar in dem Gehäuse (3) gelagertes Drehkolben-Stellglied (5); und
- eine insbesondere nach einem der Ansprüche 1 bis 6 ausgebildete Dichtung (1) mit einer fluidströmungsaufwärts des Drehkolbens (5) angeordneten und dem einströmenden Fluidströmungsdruck ausgesetzten, dem Drehkolben (5) zugewandten Druckauflagefläche (37), über die die Dichtung (1) mittels des Fluidströmungsdrucks von dem Drehkolben (5) weg drängbar ist, und einer fluidströmungsaufwärts des Drehkolbens (5) angeordneten und dem einströmenden Fluidströmungsdruck ausgesetzten, dem Gehäuse (3) zugewandten Druckauflagefläche (35), über die die Dichtung (1) mittels des Fluidströmungsdrucks zu dem Drehkolben (5) hin drängbar ist, wobei die drehkolbenseitige Druckauflagefläche (37) und die gehäuseseitige Druckauflagefläche (35) derart aufeinander abgestimmt sind, dass die Dichtung (1) in Richtung des Drehkolbens (5) gedrängt ist.

13. Fluidstellventil nach Anspruch 12, wobei die Dichtung (1) als Teil einer nach einem der Ansprüche 7 bis 11 ausgebildeten Dichtungsbaugruppe (10) in das Fluidstellventil als Montageeinheit montiert ist.

14. Fluidstellventil nach Anspruch 12 oder 13, wobei die Dichtung (1) in Richtung des Drehkolbens (5) vorgespannt ist, insbesondere mittels einer Vorspannkomponente (15), wie einer Feder, insbesondere einer nach einem der Ansprüche 7 bis 11 ausgebildeten Dichtungsbaugruppe (10), wobei insbesondere die Vorspannkomponente (15) separat zu der Dichtung (1) hergestellt ist.

15. Fluidstellventil nach einem der Ansprüche 12 bis 14, wobei die drehkolbenseitige Druckauflagefläche (37) durch eine, insbesondere von der Druckauflagefläche vorstehende, Dichtlippe zum Ausbilden eines dynamischen Dichtkontakts mit dem Drehkolben (5) von einer fluidströmungsabwärts des Drehkolbens (5) angeordneten und dem Fluidströmungsdruck fluidströmungsabwärts des Drehkolbens (5) ausgesetzten drehkolbenseitigen Innendruckauflagefläche getrennt ist.

16. Fluidstellventil nach Anspruch 15, wobei die Position der dynamischen Dichtlippe an der Dichtung (1) das Flächenverhältnis aus drehkolbenseitiger Druckauflagefläche (37) und gehäuseseitiger Druckauflagefläche (35) bestimmt, wobei insbesondere die dynamische Dichtlippe (39) so positioniert ist, dass die drehkolbenseitige Druckauflagefläche (37) kleiner als die gehäuseseitige Druckauflagefläche (35) ist.

17. Fluidstellventil, insbesondere nach einem der Ansprüche 12 bis 16, beispielsweise zum Thermomanagement in einem Kraftfahrzeug, umfassend:
- ein fluidführendes Gehäuse (3);
- ein drehbar in dem Gehäuse (3) gelagertes Drehkolben-Stellglied (5); und eine insbesondere nach einem der Ansprüche 1 bis 6 ausgebildete Dichtung (1) mit einer fluidströmungsaufwärts des Drehkolbens (5) angeordneten und dem einströmenden Fluidströmungsdruck ausgesetzten, dem Drehkolben (5) zugewandten Druckauflagefläche (37), über die die Dichtung (1) mittels des Fluidströmungsdrucks von dem Drehkolben (5) weg drängbar ist, und einer fluidströmungsaufwärts des Drehkolbens (5) angeordneten und dem einströmenden Fluidströmungsdruck ausgesetzten, dem Gehäuse (3) zugewandten Druckauflagefläche (35), über die die Dichtung (1) mittels des Fluidströmungsdrucks zu dem Drehkolben (5) hin drängbar ist, wobei ein Flächenverhältnis aus gehäuseseitiger Druckauflagefläche (35) zu drehkolbenseitiger Druckauflagefläche (37) bei einem Fluidströmungsdruck von bis zu 2,5 bar Überdruck gegenüber der Umgebung im Bereich von 1,5 und 2,0 und/oder bei einem Fluidströmungsdruck von bis zu 5,0 bar Überdruck gegenüber der Umgebung im Bereich von 1,0 und 1,5 liegt.

18. Verfahren zum Auslegen einer insbesondere nach einem der Ansprüche 1 bis 6 Dichtung (1) oder einer insbesondere nach einem der Ansprüche 7 bis 11 ausgebildeten Dichtungsbaugruppe (10) für ein insbesondere nach einem der Ansprüche 12 bis 17 ausgebildetes Fluidstellventil, das ein drehbar gelagertes Drehkolben-Stellglied (5) aufweist, beispielsweise zum Thermomanagement in einem Kraftfahrzeug, bei dem:
- ein Außendruck fluidströmungsaufwärts des Drehkolbens (5) und ein Innendruck fluidströmungsabwärts des Drehkolbens (5) vorgegeben oder erfasst werden;
- in Abhängigkeit einer Druckdifferenz von Außen- und Innendruck ein Flächenverhältnis einer fluidströmungsaufwärts des Drehkolbens (5) anzuordnenden und dem Außendruck auszusetzenden, dem Drehkolben (5) zuzuwendenden Druckauflagefläche, über die die Dichtung (1) mittels des Fluidströmungsdrucks von dem Drehkolben (5) weg drängbar ist, und einer fluidströmungsaufwärts des Drehkolbens (5) anzuordnenden und dem Außendruck auszusetzenden, einem fluidführenden Gehäuse des Fluidstellventils zuzuwendenden Druckauflagefläche, über die die Dichtung (1) mittels des Fluidströmungsdrucks zu dem Drehkolben (5) hin drängbar ist, bestimmt wird.

19. Verfahren nach Anspruch 18, bei dem ferner ein Flächenverhältnis der drehkolbenseitigen Druckauflagefläche und einer fluidströmungsabwärts des Drehkolbens (5) anzuordnenden und dem Innendruck des Drehkolbens (5) auszusetzenden drehkolbenseitigen Innendruckauflagefläche bestimmt wird

20. Verfahren nach Anspruch 19, bei dem das Flächenverhältnis dadurch eingestellt wird, dass eine Position einer die drehkolbenseitige Druckauflagefläche (37) und die drehkolbenseitige Innendruckauflagefläche voneinander trennenden Dichtlippe zum Ausbilden eines dynamischen Dichtkontakts mit dem Drehkolben (5) variiert wird.
